# FASCICULE DE BREVET EUROPEEN

(11) **EP 2 925 793 B1**
(45) Date de publication et mention de la délivrance du brevet: **11.01.2017**
(21) Numéro de dépôt: 13799238.4
(22) Date de dépôt: 21.11.2013
(51) Int. Cl.: C08C 19/02, C08F 4/606, B60C 1/00

(54) **COMPOSITION DE CAOUTCHOUC COMPRENANT UN ÉLASTOMÈRE DIÉNIQUE FORTEMENT SATURÉ**
KAUTSCHUKZUSAMMENSETZUNG MIT EINEM HOCHGESÄTTIGTEN DIENELASTOMER
RUBBER COMPOSITION CONTAINING A HIGHLY SATURATED DIENE ELASTOMER

(30) Priorité: 29.11.2012 FR 1261383
(43) Date de publication de la demande: 07.10.2015
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: SCHNELL, Benoît, F-63040 Clermont-ferrand Cedex 9 (FR); THUILLIEZ, Julien, F-63040 Clermont-Ferrand Cedex 9 (FR); CLADIERE, Julien, F-63040 Clermont-Ferrand Cedex 9 (FR)
(74) Mandataire: Gandon-Pain, Sylvie
(86) Numéro de dépôt international: PCT/EP2013/074393
(87) Numéro de publication internationale: WO 2014/082919

(56) Documents cités:
- EP-A1- 0 889 057
- EP-A1- 1 605 000
- FR-A1- 2 900 352
- US-A1- 2002 107 423
- US-A1- 2008 146 733
- DATABASE WPI Week 200218 Thomson Scientific, London, GB; AN 2002-134029 XP002698579, & JP 2001 270913 A (ASAHI KASEI KK) 2 octobre 2001 (2001-10-02)

## Description

### DOMAINE DE L'INVENTION

La présente invention concerne une composition de caoutchouc renforcée à base d'une matrice élastomère comprenant un élastomère diénique fortement saturé, ainsi qu'un article semi-fini comprenant une telle composition et un pneumatique incorporant un tel article semi-fini.

### ETAT DE LA TECHNIQUE

Depuis que les économies de carburant et la nécessité de préserver l'environnement sont devenues des priorités, il est souhaitable de produire des mélanges possédant de bonnes propriétés de résistance à l'usure tout en ayant une hystérèse aussi faible que possible afin de pouvoir les mettre en oeuvre sous forme de compositions de caoutchouc utilisables pour la fabrication de divers produits semi-finis entrant dans la composition de pneumatique, tels que par exemple des bandes de roulement, ce afin d'obtenir des pneumatiques possédant une résistance à l'usure améliorée sans pénalisation de la résistance au roulement.

Idéalement, par exemple, une bande de roulement de pneumatique doit obéir à un grand nombre d'exigences techniques, souvent antinomiques, parmi lesquelles une résistance élevée à l'usure tout en offrant au pneumatique une faible résistance au roulement et une adhérence élevée tant sur sol sec que sur sol mouillé, enneigé ou verglacé.

Pour améliorer la résistance à l'usure, on le sait, une certaine rigidité de la bande de roulement est souhaitable, cette rigidification de la bande de roulement pouvant être obtenue par exemple en augmentant le taux de charge renforçante ou en incorporant certaines résines renforçantes dans les compositions de caoutchouc constitutives de ces bandes de roulement.

Malheureusement, l'expérience montre qu'une telle rigidification de la bande de roulement pénalise de manière connue, le plus souvent de manière rédhibitoire, les propriétés de résistance au roulement, en s'accompagnant d'une augmentation importante des pertes hystérétiques de la composition de caoutchouc. L'amélioration de la performance de rigidité en gardant une faible résistance au roulement est de ce fait une préoccupation permanente pour les concepteurs de pneumatique.

Il existe donc un besoin permanent de fournir une composition de caoutchouc qui permette d'obtenir des pneumatiques possédant une résistance à l'usure améliorée sans pénalisation de la résistance au roulement.

Au vu de ce qui précède, il est un objectif général de fournir des compositions de caoutchouc qui satisfassent un compromis de propriétés rigidité/hystérèse acceptable pour un usage en pneumatique.

### BREVE DESCRIPTION DE L'INVENTION

Cet objectif est atteint en ce que les Inventeurs ont mis au point une composition de caoutchouc pour pneumatique qui permet d'atteindre un niveau de rigidité satisfaisant en maintenant, voire en améliorant, des propriétés d'hystérèse acceptables.

Ainsi, l'invention a pour objet une composition de caoutchouc pour pneumatique comprenant une charge renforçante et une matrice élastomère à base d'un élastomère fortement saturé, permettant d'atteindre un compromis de propriétés rigidité/hystérèse significativement amélioré.

Un autre objet de l'invention est un procédé de préparation d'une telle composition de caoutchouc pour pneumatique.

L'invention a encore pour objet un article semi-fini comprenant une telle composition de caoutchouc.

L'invention a aussi pour objet un pneumatique incorporant un tel article semi-fini.

### DESCRIPTION DETAILLEE DE L'INVENTION

Dans la présente description, sauf indication expresse différente, tous les pourcentages (%) indiqués sont des % en poids. D'autre part, tout intervalle de valeurs désigné par l'expression "entre a et b" représente le domaine de valeurs allant de plus de a à moins de b (c'est-à-dire les bornes a et b exclues) tandis que tout intervalle de valeurs désigné par l'expression "de a à b" signifie le domaine de valeurs allant de a jusqu'à b (c'est-à-dire incluant les bornes strictes a et b).

Par "composition à base de", il faut entendre une composition comportant le mélange et/ou le produit de réaction des différents constituants utilisés, certains de ces constituants de base étant susceptibles de, ou destinés à, réagir entre eux, au moins en partie, lors des différentes phases de fabrication de la composition, en particulier au cours de sa réticulation ou vulcanisation.

Un premier objet de l'invention est une composition de caoutchouc à base d'une charge renforçante et d'une matrice élastomère comprenant au moins un élastomère diénique fortement saturé, caractérisé en ce que l'élastomère fortement saturé comprend, distribuées statistiquement au sein de l'élastomère,
- des unités des catégories A, B, C, D et E suivantes ou
- des unités de ces mêmes catégories A, B, C, D et E comprenant pour au moins une des catégories B, C, D et E un mélange d'au moins deux unités différentes de même catégorie se distinguant par la nature de leurs groupements latéraux Ri:
   A)

      -CH₂-CH₂-

      selon une fraction molaire de m %
   B) 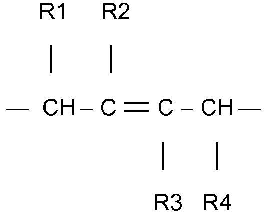 selon une fraction molaire de n%
   C) 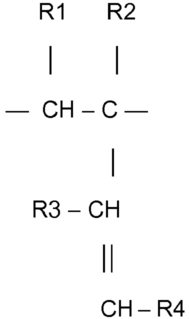 selon une fraction molaire de o%
   D) 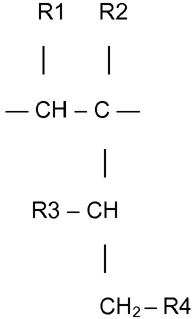 selon une fraction molaire de p %
   E) 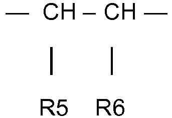 selon une fraction molaire de q %
      avec
      ∘ R1, R2, R3 et R4, identiques ou différents, désignent un atome d'hydrogène, un radical méthyle ou un radical phényle, substitué ou non en position ortho, méta ou para, par un radical méthyle,
      ∘ R5 désigne un atome d'hydrogène ou radical méthyle,
      ∘ R6 désigne un radical méthyle ou phényle, substitué ou non en position ortho, méta ou para, par un radical méthyle,
      ∘ m, n, o, p et q sont des nombres allant de 0 à 100,
la fraction molaire de chaque unité étant définie par rapport à la totalité de l'élastomère,
et en ce que l'élastomère fortement saturé présente les caractéristiques suivantes:
- m / p ≥ 1,75
- m ≥ 20
- n + o ≥ 10
- o + p ≤ 30

De préférence, les taux molaires de chacune des unités de l'élastomère fortement saturé sont tels que l'élastomère présente en outre les caractéristiques suivantes:
- m ≥ 50 et
- o + p ≤ 15

Selon un autre aspect préférentiel, combiné ou non à l'aspect préférentiel précédent, l'élastomère fortement saturé est tel que o = 0.

Selon une variante de l'invention, l'élastomère fortement saturé est constitué uniquement d'unités choisies parmi les catégories A, B, C, D et E selon leurs taux molaires respectifs.

Selon une autre variante de l'invention, l'élastomère fortement saturé comprend, outre des unités choisies parmi les catégories A, B, C, D et E, des unités de catégorie F issues exclusivement de monomères non diéniques selon un taux molaire inférieur à 40%, particulièrement inférieur à 30%, voire inférieur à 20%, par rapport à la totalité de l'élastomère:
F) 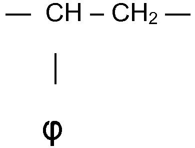 avec ϕ désignant un radical phényle, substitué ou non en position ortho, méta ou para, par un radical méthyle, de préférence ϕ désigne un radical phényle.

Il est entendu que cet élastomère diénique fortement saturé peut être constitué par un mélange d'élastomères diéniques fortement saturés qui se différencient des uns des autres par leurs microstructures ou par leurs macrostructures.

Selon ces deux variantes, il est une mise en oeuvre particulière de l'invention selon laquelle l'élastomère fortement saturé est tel que R1, R2, R3 et R4 sont identiques et désignent un atome d'hydrogène et q vaut 0.

Selon ces deux variantes, il est une autre mise en oeuvre particulière de l'invention selon laquelle l'élastomère fortement saturé est tel que
- pour l'unité B, R1, R3 et R4 sont identiques et désignent un atome d'hydrogène et R2 désigne un radical méthyle
- pour l'unité C, celle-ci est constituée d'un mélange de deux unités C, notées C1 et C2, différant par la nature des R2 et R3, les groupements R1 et R4 étant identiques et désignant un atome d'hydrogène, avec
   pour C1, R2 désigne un radical méthyle et R3 désigne un atome d'hydrogène,
   pour C2, R2 désigne un atome d'hydrogène et R3 désigne un radical méthyle,
- pour l'unité D, celle-ci est constituée d'un mélange de deux unités D, notées D1 et D2, différant par la nature des R2 et R3, les groupements R1 et R4 étant identiques et désignant un atome d'hydrogène,
   pour D1, R2 désigne un radical méthyle et R3 désigne un atome d'hydrogène,
   pour D2, R2 désigne un atome d'hydrogène et R3 désigne un radical méthyle,et
- q vaut 0.

Selon ces deux variantes, il est encore une autre mise en oeuvre particulière de l'invention selon laquelle l'élastomère fortement saturé est tel que
- pour l'unité B, celle-ci est constituée d'un mélange de deux unités B, notées B1 et B2, différant par la nature de R2, les groupements R1, R3 et R4 étant identiques et désignant un atome d'hydrogène, avec
   pour B1, R2 désigne un atome d'hydrogène,
   pour B2, R2 désigne un radical méthyle,
- pour l'unité C, celle-ci est constituée d'un mélange de trois unités C notées C1, C2 et C3, différant par la nature des R2 et R3, R1 et R4 étant identiques et désignant un atome d'hydrogène, avec
   pour C1, R2 désigne un radical méthyle et R3 désigne un atome d'hydrogène,
   pour C2, R2 désigne un atome d'hydrogène et R3 désigne un radical méthyle,
   pour C3, R2 et R3, identiques, désignent un atome d'hydrogène
- pour l'unité D, celle-ci est constituée d'un mélange de trois unités D notées D1, D2 et D3, différant par la nature des R2 et R3, les groupements R1 et R4 étant identiques et désignant un atome d'hydrogène, avec
   pour D1, R2 désigne un radical méthyle et R3 désigne un atome d'hydrogène,
   pour D2, R2 désigne un atome d'hydrogène et R3 désigne un radical méthyle,
   pour D3, R2 et R3, identiques, désignent un atome d'hydrogène
- q vaut 0.

Selon l'invention, l'élastomère diénique fortement saturé présente une masse molaire moyenne en nombre d'au moins 90 000 g/mol et d'au plus 1 500 000 g/mol. L'indice de polydispersité Ip, égal à Mw/Mn (rapport de la masse molaire en poids à la masse molaire en nombre), est compris entre 1 et 3.

L'élastomère fortement saturé peut être obtenu selon différentes méthodes de synthèses connues de l'homme du métier, notamment en fonction des valeurs visées de m, n, o, p et q.

Selon une méthode de synthèse, l'élastomère fortement saturé est obtenu par hydrogénation d'un élastomère diénique.

A titre d'élastomère diénique à hydrogéner, on entend alors tout homopolymère d'un monomère diène conjugué choisi parmi le 1,3-butadiène, le 2-méthyl-1,3-butadiène, un aryl-1,3-butadiène, le 1,3-pentadiène, ou tout copolymère obtenu par copolymérisation des diènes conjugués précédents entre eux ou avec le 2,3-diméthyl-1,3-butadiène ou le 2,4-hexadiène, ou avec un ou plusieurs composés " vinyle aromatique " ayant de 8 ou 9 atomes de carbone. Dans ce dernier cas de copolymères, ceux-ci contiennent au moins 60 % molaire d'unités diéniques et au plus 40% molaire d'unités vinylaromatiques.

A titre de monomère vinylique aromatique convient notamment le styrène ou un styrène substitué en position ortho, méta ou para par un radical méthyle.

Préférentiellement, l'élastomère diénique est choisi dans le groupe constitué par les polybutadiènes (BR), le caoutchouc naturel (NR), les polyisoprènes de synthèse (IR), les copolymères de butadiène, les copolymères d'isoprène, et les mélanges de ces élastomères. Les copolymères de butadiène et les copolymères d'isoprène sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

L'élastomère peut être préparé en émulsion ou en solution. Les conditions de polymérisation utilisées, notamment la présence ou non d'un agent modifiant et/ou randomisant et des quantités d'agent modifiant et/ou randomisant employées permettent de synthétiser l'élastomère selon une microstructure bien définie en vue d'obtenir les valeurs visées de m, n, o, p et q. Le choix de ces agents et de leur quantité est à la portée de l'homme du métier.

L'hydrogénation de l'élastomère diénique s'effectue selon toute méthode connue de l'homme de l'art. A titre d'exemple, on peut se référer aux méthodes d'hydrogénation décrites dans « The Handbook of Homogeneous Hydrogenation », Editors Johannes G. de Vries, Cornelis J. Elsevier - WILEY 2008 - Chapitre 19 - Homogeneous Catalytic Hydrogenation of Polymers, par Garry L. Rempel, Qinmin Pan, et Jialong Wu.

Notamment, l'élastomère fortement saturé est obtenu en réalisant la réaction d'hydrogénation partielle d'un élastomère diénique insaturé, selon les méthodes connues de l'homme de l'art. Le polymère à hydrogéner est dissout dans un solvant hydrocarboné inerte, tel que le cyclohexane, le méthylcyclohexane, l'hexane, à l'abri de l'oxygène et de l'humidité. L'hydrogénation de l'élastomère diénique insaturé est réalisée selon un mode opératoire connu de l'homme de l'art, par exemple tel que décrit dans la demande de brevet US 5,334,566 de la société Shell Oil Company. A ce titre, la solution est purifiée par élimination des impuretés volatiles par un bullage d'azote puis chauffée à une température. On ajoute à la solution un composé organique d'un métal alcalin, de préférence un composé hydrocarboné lithié de type alkyllithium par exemple. L'azote est ensuite dégazé et du dihydrogène est introduit sous pression. Le mélange est agité et la température stabilisée dans le domaine allant de 0°C à 120°C, de préférence de 60°C à 90°C.

A ce stade, un réactif de type Tebbe en solution dans un solvant hydrocarboné inerte, de préférence identique à celui de l'élastomère, et préparé selon un mode opératoire connu de l'homme de l'art, par exemple tel que décrit dans la demande de brevet US 5,886,108 de la société Asahi, est ajouté de manière à générer in situ le catalyseur d'hydrogénation, par réaction du réactif Ti-Al avec l'hydrure de métal alcalin présent dans le milieu réactionnel. La pression en dihydrogène est maintenue dans un domaine allant de 0,05 bars à 83 bars. La concentration en catalyseur varie dans un domaine allant de 0,01 mmol pour 100 g d'élastomère à 20 mmol pour 100 g d'élastomère.

La consommation d'hydrogène est suivie au cours du temps. Lorsque la quantité visée est atteinte, la quantité étant liée au taux d'hydrogénation ciblé, l'alimentation en dihydrogène est coupée et le milieu est désactivé par dégazage et par ajout d'une solution d'éthanol diluée dans le solvant hydrocarboné inerte. La solution résultante de polymère diénique partiellement hydrogéné est vidangée, le polymère est récupéré par une étape de stripping puis par séchage. La durée de l'hydrogénation varie généralement de 30 à 360 minutes

L'homme de l'art saura ajuster les conditions d'hydrogénation, notamment le rapport molaire métal alcalin au titane, la température, la pression et la durée, pour atteindre les caractéristiques visées de microstructure de l'élastomère fortement saturé de l'invention, définies plus haut.

Selon une variante, la composition de caoutchouc conforme à l'invention comprend l'élastomère diénique fortement saturé comme constituant unique de la matrice élastomère.

Selon une autre variante, la composition de caoutchouc conforme à l'invention peut comprendre en outre au moins un autre élastomère diénique. Selon cette variante, cet autre élastomère est présent dans des proportions d'au plus 60 pce (parties en poids pour cent parties d'élastomère total), de préférence d'au plus 45 pce. En outre, cet élastomère est présent de préférence dans des proportions d'au moins 5 pce.

Selon cette variante, cet autre élastomère diénique peut être tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymère, il contient de 20 à 99% en poids d'unités diéniques et de 1 à 80% en poids d'unités vinylaromatiques.

A titre de diènes conjugués conviennent notamment le 1,3-butadiène, le 2-méthyl-1,3-butadiène, les 2,3-di(alkyle en C1-C5)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène, le 1,3-pentadiène, le 2,4-hexadiène. A titre de composés vinylaromatiques conviennent par exemple le styrène, l'ortho-, méta-, paraméthylstyrène, le mélange commercial "vinyle-toluène", le paratertiobutylstyrène, les méthoxystyrènes, les chlorostyrènes, le vinylmésitylène, le divinylbenzène, le vinylnaphtalène.

Cet autre élastomère diénique peut avoir toute microstructure. Il peut être à blocs, statistique, séquencé, microséquencé, et être préparé en émulsion ou en solution. Il peut être couplé et/ou étoilé ou encore fonctionnalisé avec un agent de couplage et/ou d'étoilage ou de fonctionnalisation.

Préférentiellement, cet autre élastomère diénique utilisé dans l'invention est choisi dans le groupe des élastomères diéniques fortement insaturés constitué par les polybutadiènes (BR), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Il est entendu que cet autre élastomère diénique peut être constitué par un mélange d'élastomères diéniques qui se différencient des uns des autres par leurs microstructures, par leurs macrostructures ou par la présence d'une fonction, par la nature ou la position de cette dernière sur la chaîne élastomère.

La composition de caoutchouc conforme à l'invention a pour autre caractéristique essentielle de comprendre une charge renforçante par exemple du noir de carbone, une charge inorganique renforçante telle que de la silice à laquelle est associé de manière connue un agent de couplage, ou encore un mélange de ces deux types de charge.

Selon une variante de l'invention, la charge renforçante est majoritairement constituée de noir de carbone, c'est-à-dire qu'elle comprend au moins 50% en poids du poids total de la charge, de noir de carbone.

Selon cette variante la charge renforçante peut être constituée à 100% en poids de noir de carbone. Si la charge renforçante comprend moins de 100% en poids de noir de carbone, le complément de charge est apporté par au moins une autre charge renforçante, notamment la silice.

Selon une autre variante de l'invention, la charge renforçante est majoritairement autre que du noir de carbone, c'est-à-dire qu'elle comprend plus de 50% en poids du poids total de la charge, d'une ou de plusieurs charges autres que du noir de carbone, notamment une charge inorganique renforçante telle que la silice, voire elle est exclusivement constituée d'une telle charge.

Selon cette autre variante, lorsque du noir de carbone est également présent, il peut être utilisé à un taux inférieur à 20 pce, plus préférentiellement inférieur à 10 pce (par exemple entre 0.5 et 20 pce, notamment entre 2 et 10 pce). Dans les intervalles indiqués, on bénéficie des propriétés colorantes (agent de pigmentation noire) et anti-UV des noirs de carbone.

De manière préférentielle, le taux de charge renforçante totale (noir de carbone et/ou autre charge renforçante telle que la silice) est compris entre 10 et 200 pce, plus préférentiellement entre 30 et 150 pce, l'optimum étant de manière connue différent selon les applications particulières visées.

Comme noirs de carbone conviennent tous les noirs de carbone, utilisés individuellement ou sous forme de mélanges, notamment les noirs conventionnellement mis en oeuvre dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

Comme charge inorganique renforçante autre que du noir de carbone, doit être entendu ici toute autre charge inorganique ou minérale, quelles que soient sa couleur et son origine (naturelle ou de synthèse), capable de renforcer à elle seule, sans autre moyen qu'un agent de couplage intermédiaire, une composition de caoutchouc destinée à la fabrication de pneumatiques; une telle charge se caractérise généralement, de manière connue, par la présence de groupes hydroxyles (OH) à sa surface.

Comme charges inorganiques renforçantes autres que du noir de carbone conviennent notamment des charges minérales du type siliceux, préférentiellement la silice (SiO2). La silice utilisée peut être toute silice renforçante connue de l'homme du métier, notamment toute silice précipitée ou pyrogénée présentant une surface BET ainsi qu'une surface spécifique CTAB toutes deux inférieures à 450 m2/g, de préférence de 30 à 400 m2/g, notamment entre 60 et 300 m2/g. On citera également les charges minérales du type alumineux, en particulier de l'alumine (Al203) ou des (oxyde)hydroxydes d'aluminium, ou encore des oxydes de titane renforçants, par exemple décrits dans US 6 610 261 et US 6 747 087. Comme charges renforçantes conviennent également des charges renforçantes d'une autre nature, notamment du noir de carbone, dès lors que ces charges renforçantes seraient recouvertes d'une couche siliceuse, ou bien comporteraient à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

L'état physique sous lequel se présente la charge inorganique renforçante est indifférent, que ce soit sous forme de poudre, de microperles, de granulés, ou encore de billes. Bien entendu on entend également par charge inorganique renforçante des mélanges de différentes charges renforçantes, en particulier de silices hautement dispersibles telles que décrites ci-dessus.

Lorsque la charge renforçante comprend une charge nécessitant l'utilisation d'un agent de couplage pour établir la liaison entre la charge et l'élastomère, la composition de caoutchouc selon l'invention comprend en outre, de manière classique, un agent susceptible d'assurer efficacement cette liaison. Lorsque la silice est présente dans la composition à titre de charge renforçante, on peut utiliser comme agents de couplage des organosilanes, notamment des alkoxysilanes polysulfurés ou des mercaptosilanes, ou encore des polyorganosiloxanes au moins bifonctionnels. Des agents de liaison silice/élastomère, notamment, ont été décrits dans un grand nombre de documents, les plus connus étant des alkoxysilanes bifonctionnels tels que des alkoxysilanes polysulfurés.

Dans les compositions conformes à l'invention, le taux d'agent de couplage est avantageusement inférieur à 20 pce, étant entendu qu'il est en général souhaitable d'en utiliser le moins possible. Son taux est préférentiellement compris entre 0,5 et 12 pce. La présence de l'agent de couplage dépend de celle de la charge inorganique renforçante autre que du noir de carbone. Son taux est aisément ajusté par l'homme du métier selon le taux de cette charge; il est typiquement de l'ordre de 0,5% à 15% en poids par rapport à la quantité de charge inorganique renforçante autre que du noir de carbone.

Les compositions de caoutchouc conformes à l'invention peuvent également contenir, en complément des agents de couplage, des activateurs de couplage, des agents de recouvrement des charges ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

Les compositions de caoutchouc conformes à l'invention peuvent également contenir, des charges organiques renforçantes qui peuvent remplacer tout ou partie des noirs de carbone ou des autres charges inorganiques renforçantes décrites plus haut. Comme exemples de charges organiques renforçante, on peut citer les charges organiques de polyvinyle fonctionnalisé telles que décrites dans les demandes WO-A-2006/069792, WO-A-2006/069793, WO-A-2008/003434 et WO-A-2008/003435.

Les compositions de caoutchouc conformes à l'invention peuvent comporter également tout ou partie des additifs usuels habituellement utilisés dans les compositions d'élastomères destinées à la fabrication de pneumatiques, comme par exemple des pigments, des agents de protection tels que cires anti-ozone, anti-ozonants chimiques, anti-oxydants, des agents anti-fatigue, des résines renforçantes ou plastifiantes, des accepteurs (par exemple résine phénolique novolaque) ou des donneurs de méthylène (par exemple HMT ou H3M) tels que décrits par exemple dans la demande WO 02/10269, un système de réticulation à base soit de soufre, soit de donneurs de soufre et/ou de peroxydes et/ou de bismaléimides, des accélérateurs de vulcanisation, des activateurs de vulcanisation, des promoteurs d'adhésion tels que des composés à base de cobalt, des agents plastifiants, préférentiellement non aromatiques ou très faiblement aromatiques choisis dans le groupe constitué par les huiles naphténiques, paraffiniques, huiles MES, huiles TDAE, les plastifiants éthers, les plastifiants esters, les résines hydrocarbonées présentant une haute Tg, de préférence supérieure à 30 °C, telles que décrites par exemple dans les demandes WO 2005/087859, WO 2006/061064 et WO 2007/017060, et les mélanges de tels composés.

L'invention à également pour objet un procédé de préparation d'une composition de caoutchouc telle que décrite précédemment.

La composition est fabriquée dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé conforme à l'invention pour préparer une composition de caoutchouc selon l'invention comporte au moins les étapes suivantes :
- la réalisation, à une température maximale comprise entre 130°C et 200 °C, de préférence entre 145°C et 185°C, d'un premier temps de travail thermomécanique (parfois qualifié de phase " non productive") des constituants de base nécessaires de la composition de caoutchouc, à l'exception du système de réticulation et le cas échéant un promoteur d'adhésion, par incorporation de manière intime, par malaxage en une ou plusieurs étapes, à la matrice élastomère comprenant l'élastomère fortement saturé, d'ingrédients de la composition, puis
- la réalisation, à une température inférieure à ladite température maximale dudit premier temps, de préférence inférieure à 120°C, d'un second temps de travail mécanique au cours duquel est incorporé ledit système de réticulation et le cas échéant un promoteur d'adhésion,

Selon des variantes de l'invention, le procédé de préparation de la composition de caoutchouc comprend l'étape de préparation de l'élastomère fortement saturé telle que décrite plus haut selon ses différentes méthodes de synthèse.

La composition finale ainsi obtenue peut ensuite être calandrée, par exemple sous la forme d'une feuille, d'une plaque ou encore extrudée, par exemple pour former un profilé de caoutchouc utilisable comme produit semi- fini en caoutchouc destiné au pneumatique.

L'invention a également pour objet un produit semi-fini en caoutchouc comprenant une composition de caoutchouc renforcée selon l'invention.

L'invention a également pour objet un pneumatique dont au moins un de ses éléments constitutifs est un produit semi-fini en caoutchouc comprenant une composition de caoutchouc renforcée selon l'invention.

En raison de l'amélioration de la rigidité qui caractérise une composition de caoutchouc renforcée selon l'invention, sans détériorer les propriétés d'hystérèse, on notera qu'un pneumatique dont la bande de roulement comprend la composition présente une résistance à l'usure avantageusement augmentée sans pénaliser la résistance au roulement.

Les caractéristiques précitées de la présente invention, ainsi que d'autres, seront mieux comprises à la lecture de la description suivante de plusieurs exemples de réalisation de l'invention, donnés à titre illustratif et non limitatif.

### • MESURES ET TESTS UTILISES

Les compositions de caoutchouc sont caractérisées après cuisson, comme indiqué ci-après.

### a) Propriétés mécaniques

### Essais de traction

Ces essais de traction permettent de déterminer les contraintes d'élasticité et les propriétés à la rupture. Sauf indication différente, ils sont effectués conformément à la norme française NF T 46-002 de septembre 1988. On mesure en seconde élongation (i.e., après un cycle d'accommodation au taux d'extension prévu pour la mesure elle-même) le module sécant nominal (ou contrainte apparente, en MPa) à 10% et 100% d'allongement (notés respectivement MA10 et MA100). Les mesures de traction pour déterminer les modules accommodés sécants sont effectuées soit à la température de 23°C +/-2°C, soit à la température de 60°C +/-2°C, et dans les conditions normales d'hygrométrie (50 +/- 5% d'humidité relative). Ces valeurs sont représentatives de la rigidité: plus la valeur des modules est élevée, plus la rigidité est élevée.

### b) Propriétés dynamiques

Les propriétés dynamiques G* et tan(δ)max sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349-99, ou selon les cas à une température différente, en particulier dans le premier exemple cité, la température de mesure est de 60°C. On effectue un balayage en amplitude de déformation de 0,1% à 100% crête-crête (cycle aller), puis de 100% à 0,1% crête-crête (cycle retour). Les résultats exploités sont le module complexe de cisaillement dynamique (G*) et le facteur de perte tan(δ). Pour le cycle retour, on indique la valeur maximale de tan(δ) observée, noté tan(δ)max. Cette valeur est représentative de l'hystérèse du matériau et dans le cas présent de la résistance au roulement : plus la valeur de tan(δ)max est faible, plus la résistance au roulement est basse. Les valeurs de G* mesurées à 23°C ou 60°C sont représentatives de la rigidité, c'est-à-dire de la résistance à la déformation: plus la valeur de G* est élevée plus la rigidité du matériau est importante, et donc la résistance à l'usure élevée.

### • EXEMPLIFICATION 1

Les essais qui suivent démontrent l'amélioration de la rigidité des compositions de caoutchouc selon l'invention, tout en conservant le même niveau d'hystérèse donc de résistance au roulement, voire en améliorant l'hystérèse en baissant sa valeur, comparativement à des compositions témoins. Les compositions testées peuvent tout particulièrement constituer une bande de roulement, pour lesquelles la charge renforçante est du noir de carbone.

### Les Elastomères

Les élastomères P1, P2 et P3 seront obtenus par hydrogénation à partir d'un élastomère diénique, et plus précisément l'élastomère diénique 1 des témoins.

L'élastomère P est un SBR constitué de la façon suivante : 15% de motifs styrène, 20% de motifs butadiène1,2 et 65% de motifs butadiène 1,4 (Tg = -49°C) ;
L'élastomère Q est un SBR constitué de la façon suivante : 19% de motifs styrène, 4% de motifs butadiène1,2 et 77% de motifs butadiène 1,4 (Tg = -55°C)
L'élastomère P1 est obtenu par hydrogénation de 41% des doubles liaisons de l'Elastomère P.

L'élastomère P2 est obtenu par hydrogénation de 65% des doubles liaisons de l'Elastomère P.

L'élastomère P3 est obtenu par hydrogénation de 77% des doubles liaisons de l'Elastomère P.

L'élastomère Q1 est obtenu par hydrogénation de 51% des doubles liaisons de l'Elastomère Q, plus riche en motifs butadiénique 1,4 que l'Elastomère P.

**Tableau 1**

| Elastomère | P | P1 | P2 | P3 | Q | Q1 |
|---|---|---|---|---|---|---|
| Unité diénique (% molaire) ∼ Motif B+C | 85 | 43 | 22 | 14 | 81 | 29 |
| Taux d'hydrogénation (%) | - | 41 | 65 | 77 | - | 51 |
| Styrène (% molaire) ∼ Motif F | 15 | 13 | 11 | 10 | 19 | 14 |
| Liaison 1,2-(% molaire) ∼ Motif C | 20 | 1 | 1 | - | 4 | - |
| 1,2 hydrogéné (% molaire) Motif D | - | 16 | 14 | 14 | - | 3 |
| Liaison 1,4-(% molaire) ∼ Motif B | 65 | 42 | 21 | 14 | 77 | 29 |
| Unité éthylénique (% molaire) ∼ Motif A | - | 28 | 53 | 62 | - | 54 |

La microstructure des élastomères des exemples a été déterminée de manière connue par les techniques de RMN ¹H. On a utilisé un spectromètre « BRUKER AVANCE 500 », à des fréquences de 500 MHz pour la technique de RMN ¹H.

Dans le tableau 1, on entend par taux d'hydrogénation, le pourcentage d'unités diéniques initiales hydrogénées.

### Mode de calcul détaillé pour l'obtention de l'élastomère P1 à partir de l'élastomère P:

Le taux d'hydrogénation correspond au nombre de motifs diéniques (B+C) hydrogénés; dans l'élastomère P décrit plus haut sur 100 motifs, il y a 85 motifs diéniques. On hydrogène 65% de ces 85 motifs, soit un nombre de motifs hydrogénés valant 65*85/100 ∼ 55 motifs.

L'hydrogénation des motifs C est favorisée par rapport à celle des motifs B et on observe une hydrogénation de 19 des 20 motifs diéniques C composant une portion de chaine polymérique de 100 motifs ; ils sont transformés en 19 motifs D.

Pour satisfaire un taux d'hydrogénation de 65%, 36 motifs diéniques B sont également hydrogénés (*rappel: 55 motifs diéniques sont hydrogénés pour une portion de 100 motifs).* Ces 36 motifs diéniques sont transformés en 72 motifs éthyléniques A et il restera 29 motifs diéniques B non impactés par l'hydrogénation.

Ainsi après une hydrogénation à 65% d'une portion de chaine de 100 motifs de l'élastomère P, on obtient
∘ 15 motifs styréniques F (non impactés par l'hydrogénation)
∘ 19 motifs D obtenus par hydrogénation de motifs C
∘ 1 motif diénique C restant
∘ 36 motifs diéniques 1,4 hydrogénés ou plutôt 72 motifs éthyléniques A
∘ 29 motifs diéniques 1,4 B non impactés

Pour 100 motifs initiaux, on aura donc 136 motifs finalement. Cela est important pour calculer le % molaire de chaque motif. On arrive à :
15*100/136 = 11% de motifs styrèniques F, 19*100/136 = 14% de motifs butadiène D, 1x100/136 = 1% de motifs C, 29*100/136 = 21% de motifs B et 72*100/136 = 53% de motifs éthyléniques A.

Ce mode de calcul peut être appliqué à tous les autres élastomères du tableau 1.

### Synthèse des élastomères fortement saturés

Toutes les synthèses sont réalisées sous atmosphère inerte, au moyen d'équipements appropriés conditionnés sous azote ou argon (boîte à gants, réacteur, verrerie) et selon les techniques connues de l'homme de l'art (techniques de Schlenk).
Les solvants sont purifiés au préalable de manière à éliminer les traces d'oxygène ou d'humidité. Les réactifs sont issus des sources commerciales classiques (Sigma-Aldrich) et utilisés tels quels.

### Obtention d'une solution d'un élastomère diénique insaturé dans le méthylcyclohexane.

L'élastomère à hydrogéner est dissout dans le méthylcyclohexane (MCH). La concentration massique en élastomère est voisine de 5%.

### Préparation d'un réactif de type Tebbe.

Dans une bouteille en verre de 250 ml équipée d'un joint septum étanche à l'oxygène et à l'humidité et maintenu par une capsule métallique, sont introduits 2,61 g de Cp₂TiCl₂ (TDC (titanocène dichloride) à 0,01 mol) et 84 ml de MCH.

20 ml de TMA (triméthylaluminium) à 1 mol/L dans le MCH sont ensuite introduits (0,02 mol). Le mélange résultant est agité pendant 72 heures à température ambiante.

Ainsi est obtenue une solution bleu foncé, identifié Ti-Al, ayant une concentration en titane de 0,1 mol/L.

### Hydrogénation de l'élastomère diénique insaturé.

Dans un réacteur en acier inoxydable de 2 litres préalablement rendu inerte à l'azote est introduit un litre d'une solution de MCH contenant 40 grammes de l'élastomère à hydrogéner. Les impuretés volatiles sont ensuite éliminées par un bullage d'azote, réalisé pendant 3 minutes à température ambiante. La concentration en polymère est contrôlée après cette opération.

La solution est ensuite chauffée à la température de 75°C, puis 3 mmol de s-BuLi sont ajoutées sous la forme d'une solution à 1 mol/L dans le MCH. L'azote est ensuite dégazé et une pression de 2 bars de dihydrogène est appliquée. Le mélange est agité pendant 15 minutes et la température stabilisée à 75°C. A ce stade, 7,5 ml de la solution de Ti-Al sont ajoutés de manière à générer in situ le catalyseur d'hydrogénation, par réaction du réactif Ti-Al avec le LiH présent dans le milieu réactionnel. La pression en dihydrogène est maintenue à 2 bars.

### Récupération du polymère fortement saturé

La consommation d'hydrogène est suivie au cours du temps et lorsque la quantité visée est atteinte, quantité liée au taux d'hydrogénation ciblé, l'alimentation en dihydrogène est coupée et le milieu est désactivé par dégazage et par ajout d'une solution d'éthanol diluée dans le MCH. La solution résultante de polymère diénique partiellement hydrogéné est vidangée, le polymère est récupéré par une étape de stripping puis par séchage sous vide partiel (200 mbars) à 60°C sous balayage d'azote pendant 48 heures.

Ainsi, environ 40 g d'un polymère fortement saturé sont obtenus.

### Les compositions

On compare douze compositions reportées dans le tableau 2 ci-après. Trois d'entre elles sont non-conformes vis-à-vis de la formulation préconisée par l'invention :
Composition T1 : témoin avec élastomère diénique insaturé,
Composition T2 : témoin avec élastomère diénique insaturé rigidifié via l'augmentation du taux de charge
Composition T3 : témoin avec un coupage d'élastomères diéniques insaturés.

Les neuf autres compositions, M1 à M9, sont conformes à l'invention et sont à base des quatre élastomères diéniques fortement saturés décrits le tableau 1, notés P1, P2, P3 (car dérivant d'un même élastomère diénique), et Q1.

Pour les essais qui suivent, on procède de la manière suivante :

On introduit dans un mélangeur interne (taux de remplissage final : environ 70% en volume), dont la température initiale de cuve est d'environ 80°C, successivement le ou les élastomère(s) diénique(s), la charge renforçante (noir de carbone), ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 165°C. On récupère le mélange ainsi obtenu, on le refroidit puis on incorpore du soufre et un accélérateur type sulfénamide sur un mélangeur (homo-finisseur) à 30 °C, en mélangeant le tout (phase productive) pendant un temps approprié (par exemple une dizaine de minutes).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques.

Dans le tableau 2 qui suit sont détaillées les compositions testées, sachant que
(1) Elastomère insaturé P décrit plus haut
(2) Caoutchouc naturel
(3) Elastomère fortement saturé tel que préparé plus haut
(4) Noir de carbone N347
(5) Résine formophénolique
(6) N-1,3-diméthylbutyl-N-phénylparaphénylènediamine
(7) 2,2,4-triméthyl-1,2-dihydroquinoline
(8) N-cyclohexyl-2-benzothiazyl-sulfénamide
(9) Hexaméthylène tétramine

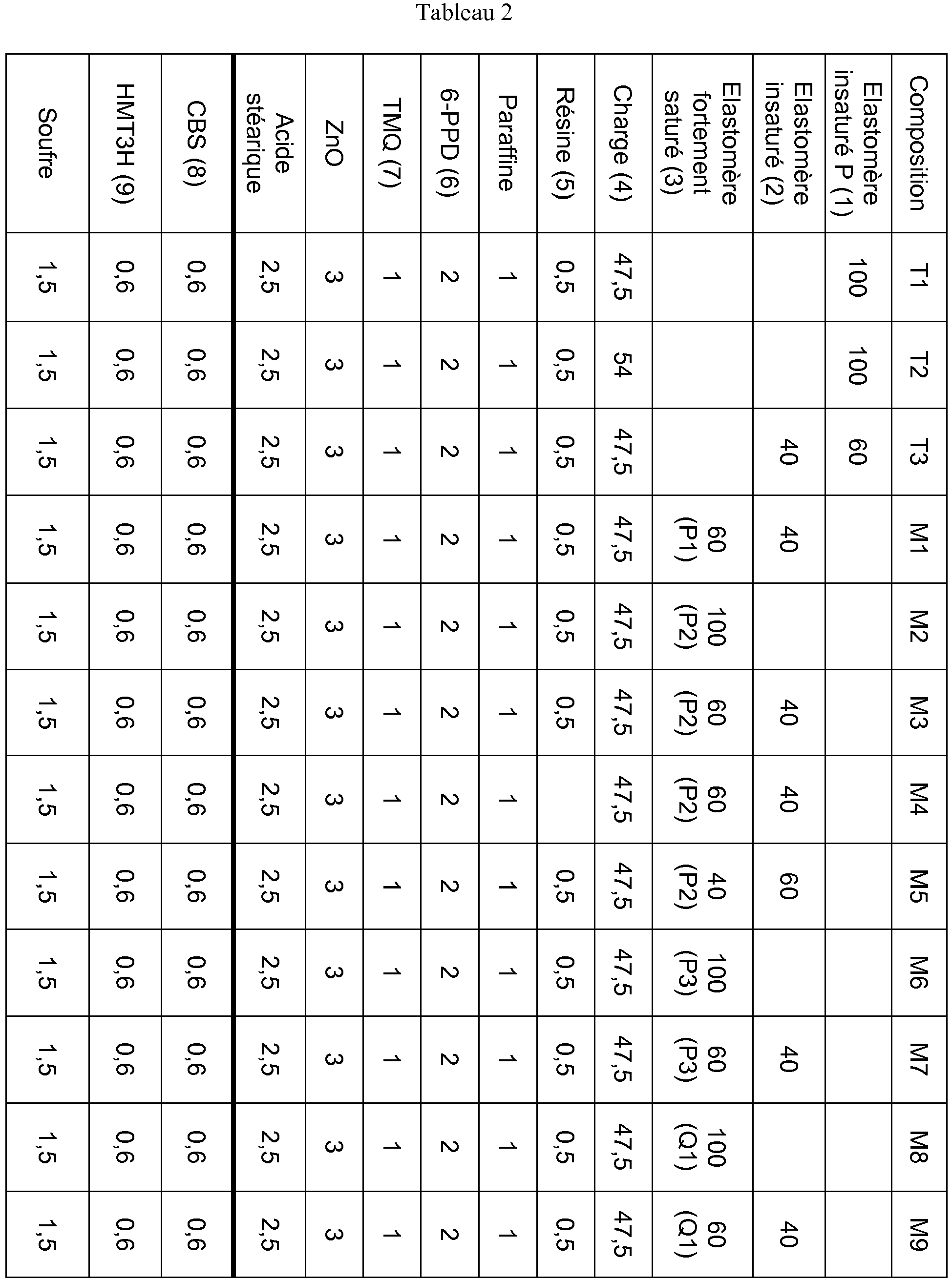

### Résultats

Les propriétés des compositions sont reportées dans le tableau 3 ci-dessous.

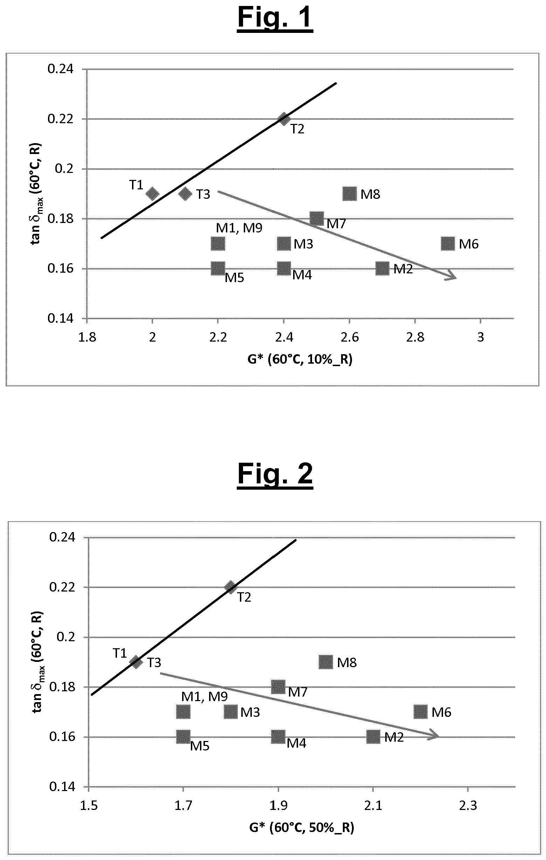

Les résultats de tan δₘₐₓ en fonction de G* sont portés sur les graphes faisant l'objet des Figure 1 et Figure 2. Les graphes permettent de visualiser directement le compromis de performances rigidité/hystérèse que la présente invention vise à améliorer.

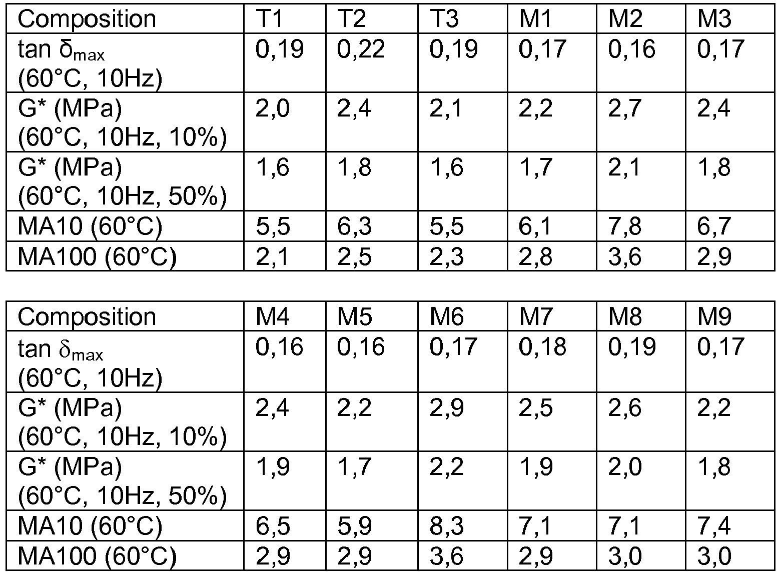

On constate que la rigidité à faible et moyenne déformations, respectivement 10 et 50% de déformation, des compositions conformes à l'invention est supérieure de celle des compositions témoins T1 et T3, et proche, voire supérieure, de celle de la composition témoin T2 comportant un taux de charge plus élevé que la composition témoin T1 en vue d'améliorer la rigidité. On observe bien que cette augmentation du taux de charge pénalise les propriétés hystérétiques de la composition témoin T2 au vu de la composition témoin T1.

Cette amélioration des propriétés mécaniques est favorable en matière de résistance à l'usure d'un pneumatique muni d'une bande de roulement constituée par une telle composition.

Malgré cette amélioration de la rigidité, les compositions conformes à l'invention exhibent des propriétés hystérétiques maintenues voire améliorées par rapport à celles des compositions témoins T1 et T3, contrairement à ce qui est observé pour la composition témoin T2.

Ceci est favorable pour diminuer la résistance au roulement d'un pneumatique muni d'une bande de roulement constituée par une telle composition.

En conclusion, les résultats de ces essais démontrent que l'emploi d'un élastomère diénique fortement saturé, permet d'améliorer de manière notable la rigidité des compositions de caoutchouc selon l'invention et donc d'améliorer la résistance à l'usure de pneumatiques les contenant, tout en maintenant, voire diminuant, l'hystérèse des compositions et donc la résistance au roulement des pneumatiques par rapport à un pneumatique conventionnel.

### • EXEMPLIFICATION 2

L'exemple qui suit montre que l'amélioration de la rigidité des compositions de caoutchouc, tout en conservant le même niveau d'hystérèse donc de résistance au roulement, voire en améliorant l'hystérèse en baissant sa valeur, comparativement à des compositions témoins, s'applique à des compositions pour laquelle la charge renforçante est inorganique, de type siliceuse dans ce cas.

### Les compositions

Les compositions seront constituées à partir des mêmes élastomères que pour l'exemple précédent, décrits dans le tableau 1.

On compare cinq compositions reportées dans le tableau 4 ci-après. Deux d'entre elles sont non-conformes vis-à-vis de la formulation préconisée par l'invention :
Composition T1' : témoin avec élastomère diénique insaturé,
Composition T2' : témoin avec élastomère diénique insaturé rigidifié via l'augmentation du taux de charge.

Les trois autres compositions, M1' à M3', sont conformes à l'invention et sont à base des trois élastomères diéniques fortement saturés distincts P2, P3 et Q1.

Pour les essais qui suivent, on procède de la manière suivante :

On introduit dans un mélangeur interne (taux de remplissage final : environ 70% en volume), dont la température initiale de cuve est d'environ 90°C, successivement le ou les élastomère(s) diénique(s), les charges renforçantes (silice et noir de carbone), ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 165°C. On récupère le mélange ainsi obtenu, on le refroidit puis on incorpore du soufre et un accélérateur type sulfénamide sur un mélangeur (homo-finisseur) à 30 °C, en mélangeant le tout (phase productive) pendant un temps approprié (par exemple une dizaine de minutes).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques.

Dans le tableau 4 qui suit sont détaillées les compositions testées, sachant que:
(1) Les élastomères utilisés dans les différentes compositions sont décrits dans le tableau 1 plus haut
(2) Silice 160MP
(3) Noir de carbone N347
(4) TESPT "Si69"
(5) Huile de tournesol oléique
(6) Résine polylimonène
(7) N-1,3-diméthylbutyl-N-phénylparaphénylènediamine
(8) Diphénylguanidine
(9) N-cyclohexyl-2-benzothiazyl-sulfénamide

| Composition | T1' | T2' | M1' | M2' | M3' |
|---|---|---|---|---|---|
| Elastomère (1) | 100 (P) | 100 (Q) | 100 (P2) | 100 (P3) | 100 (Q1) |
| Silice (2) | 90 | 110 | 90 | 90 | 90 |
| Noir de carbone (3) | 3 | 3 | 3 | 3 | 3 |
| Agent de couplage (4) | 7,2 | 8,8 | 7,2 | 7,2 | 7,2 |
| Huile (5) | 7 | 13 | 7 | 7 | 10 |
| Résine (6) | 40 | 45 | 40 | 40 | 25 |
| Cire anti-ozone | 1,65 | 1,8 | 1,65 | 1,65 | 1,5 |
| 6PPD (7) | 2,4 | 2,65 | 2,4 | 2,4 | 1,9 |
| Acide stéarique | 2 | 2 | 2 | 2 | 2 |
| DPG (8) | 1,8 | 1,8 | 1,8 | 1,8 | 1,7 |
| ZnO | 1,2 | 1,2 | 1,2 | 1,2 | 2,5 |
| CBS (9) | 2,3 | 2,3 | 2,3 | 2,3 | 1,8 |
| Soufre | 1 | 1 | 1 | 1 | 1,4 |

### Résultats

Les propriétés des compositions sont reportées dans la tableau 5 ci-dessous.

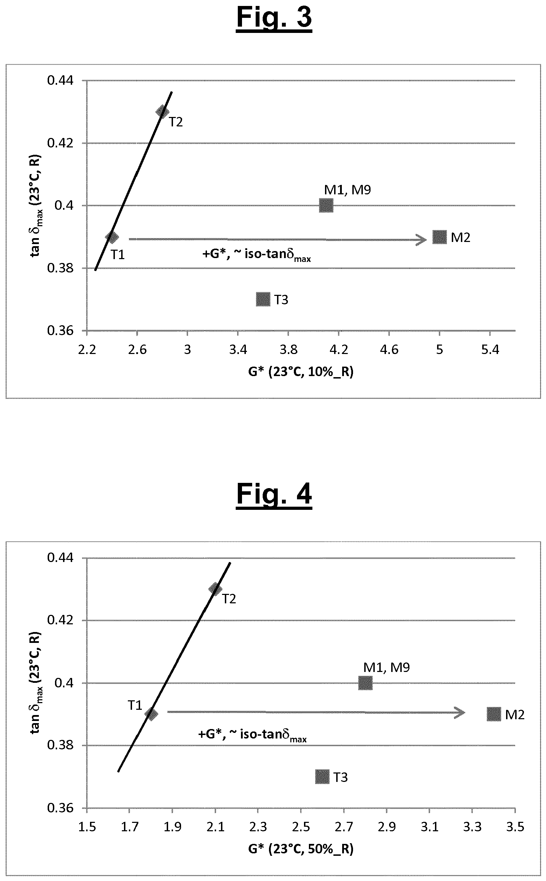

Les résultats de tan δₘₐₓ en fonction de G* sont portés sur les graphes faisant l'objet des Figure 3 et Figure 4. Comme dans le cas de l'exemple 1, les graphes permettent de visualiser directement le compromis de performances rigidité/hystérèse que la présente invention vise à améliorer.

| Composition | T1' | T2' | M1' | M2' | M3' |
|---|---|---|---|---|---|
| tan δₘₐₓ (23°C, 10Hz) | 0,39 | 0,43 | 0,37 | 0,40 | 0,39 |
| G* (MPa) (23°C, 10Hz, 10%) | 2,4 | 2,8 | 3,6 | 4,1 | 5,0 |
| G* (MPa) (23°C, 10Hz, 50%) | 1,8 | 2,1 | 2,6 | 2,8 | 3,4 |
| MA10 (23°C) | 4,3 | 5,1 | 7,3 | 8,3 | 12,1 |
| MA100 (23°C) | 1,6 | 1,7 | 2,8 | 2,5 | 3,5 |

Comme dans le cas de l'exemple 1, les résultats de ces essais démontrent que l'emploi d'un élastomère diénique fortement saturé, renforcé ici par une charge inorganique, permet d'améliorer de manière notable la rigidité des compositions de caoutchouc selon l'invention et donc d'améliorer la résistance à l'usure de pneumatiques les contenant, tout en maintenant, voire diminuant, l'hystérèse des compositions et donc la résistance au roulement des pneumatiques par rapport à un pneumatique conventionnel.

## Revendications

1. Composition de caoutchouc à base d'une charge renforçante et d'une matrice élastomère comprenant un élastomère diénique fortement saturé, **caractérisée en ce que** l'élastomère fortement saturé comprend, distribuées statistiquement au sein de l'élastomère,
- des unités des catégories A, B, C, D et E suivantes ou
- des unités de ces mêmes catégories A, B, C, D et E comprenant pour au moins une des catégories B, C, D et E un mélange d'au moins deux unités différentes de même catégorie se distinguant par la nature de leurs groupements latéraux Ri:
A)
-CH₂-CH₂-
selon une fraction molaire de m %
B) 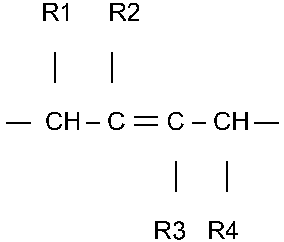 selon une fraction molaire de n%
C) 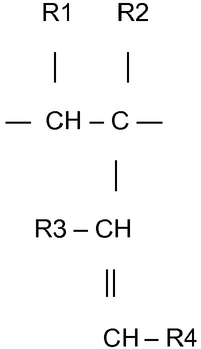 selon une fraction molaire de o %
D) 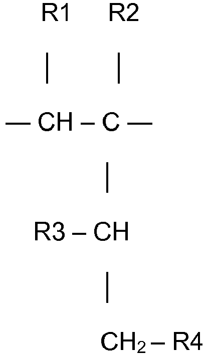 selon une fraction molaire de p %
E) 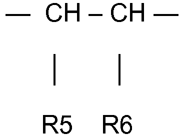 selon une fraction molaire de q %
avec
R1, R2, R3 et R4, identiques ou différents, désignent un atome d'hydrogène, un radical méthyle ou un radical phényle, substitué ou non en position ortho, méta ou para, par un radical méthyle,
R5 désigne un atome d'hydrogène ou radical méthyle,
R6 désigne un radical méthyle ou phényle, substitué ou non en position ortho, méta ou para, par un radical méthyle,
m, n, o, p et q sont des nombres allant de 0 à 100;
et **en ce que** l'élastomère fortement saturé présente les caractéristiques suivantes:
• m / p ≥ 1,75
• m ≥ 20
• n + o ≥ 10
• o + p ≤ 30

2. Composition de caoutchouc selon la revendication 1, **caractérisée en ce que** l'élastomère fortement saturé comprend des unités de catégorie F suivante issues exclusivement de monomères non diéniques, selon un taux molaire inférieur à 40%:
F) 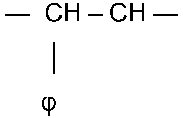 avec ϕ désignant un radical phényle, substitué ou non en position ortho, méta ou para, par un radical méthyle, de préférence ϕ désigne un radical phényle.

3. Composition de caoutchouc selon la revendication 1 ou 2, **caractérisée en ce que** l'élastomère fortement saturé est tel que R1, R2, R3 et R4 sont identiques et désignent un atome d'hydrogène et q vaut 0.

4. Composition de caoutchouc selon l'une quelconque des revendications précédentes, **caractérisée en ce que** l'élastomère fortement saturé présente les caractéristiques suivantes:
• m ≥ 50 et
• o + p ≤ 15

5. Composition de caoutchouc selon l'une quelconque des revendications précédentes, **caractérisée en ce que** o vaut 0.

6. Composition de caoutchouc selon l'une quelconque des revendications précédentes, **caractérisée en ce que** la matrice élastomère est uniquement constituée de l'élastomère diénique fortement saturé.

7. Composition de caoutchouc selon l'une quelconque des revendications 1 à 5, **caractérisée en ce que** la matrice élastomère comprend au moins 40 pce d'élastomère diénique fortement saturé et au plus 60 pce d'au moins un autre élastomère diénique

8. Composition de caoutchouc selon l'une quelconque des revendications précédentes, **caractérisée en ce que** la charge renforçante comprend du noir de carbone.

9. Composition de caoutchouc selon la revendication 8, **caractérisée en ce que** la charge renforçante est constituée à 100% de noir de carbone.

10. Composition de caoutchouc selon l'une quelconque des revendications 1 à 8, **caractérisée en ce que** la charge renforçante comprend une charge inorganique renforçante autre que du noir de carbone, de préférence la silice.

11. Procédé de préparation d'une composition de caoutchouc telle que définie dans l'une quelconque des revendications 1 à 10, **caractérisée en ce qu'**elle comporte au moins les étapes suivantes :
• la réalisation, à une température maximale comprise entre 130 °C et 200 °C, de préférence entre 145°C et 185°C, d'un premier temps de travail thermomécanique des constituants de base nécessaires de la composition de caoutchouc, à l'exception du système de réticulation et le cas échéant un promoteur d'adhésion, par incorporation de manière intime, par malaxage en une ou plusieurs étapes, à la matrice élastomère comprenant l'élastomère fortement saturé, d'ingrédients de la composition, puis
• la réalisation, à une température inférieure à ladite température maximale dudit premier temps, de préférence inférieure à 120 °C, d'un second temps de travail mécanique au cours duquel sont incorporé ledit système de réticulation et le cas échéant un promoteur d'adhésion.

12. Procédé selon la revendication 11, **caractérisé en ce qu'**elle comprend l'étape de préparation de l'élastomère fortement saturé qui consiste en l'hydrogénation d'un élastomère diénique jusqu'à atteindre les caractéristiques de microstructure définies dans la revendication 1.

13. Article semi-fini comprenant une composition de caoutchouc telle que définie dans l'une quelconque des revendications 1 à 10.

14. Pneumatique incorporant un article semi-fini selon la revendication 13.

15. Pneumatique selon la revendication 14, **caractérisé en ce que** l'article semi-fini est une bande de roulement.

## Patentansprüche

1. Kautschukzusammensetzung auf der Basis einer verstärkenden Ladung und einer Elastomermatrix, umfassend ein hochgesättigtes Dien-Elastomer,
**dadurch gekennzeichnet, dass** das hochgesättigte Elastomer, statistisch in dem Elastomer verteilt, umfasst:
- Einheiten der folgenden Kategorien A, B, C, D und E oder
- Einheiten derselben Kategorien A, B, C, D und E, umfassend mindestens eine der Kategorien B, C, D und E in Mischung mit mindestens zwei anderen Einheiten derselben Kategorie, die sich durch die Beschaffenheit ihrer Seitengruppen Ri unterscheiden:
A)
-CH₂-CH₂-
in einer Molfraktion von m %
B) 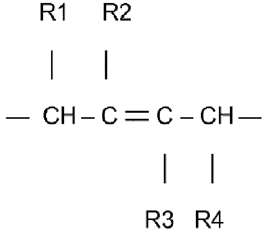 in einer Molfraktion von n %
C) 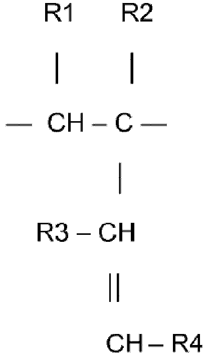 in einer Molfraktion von o %
D) 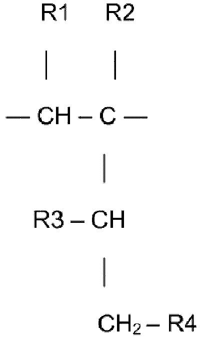 in einer Molfraktion von p %
E) 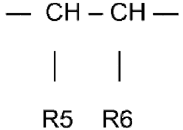 in einer Molfraktion von q %
wobei
R1, R2, R3 und R4, identisch oder verschieden, ein Wasserstoffatom, einen Methylrest oder einen Phenylrest darstellen, substituiert oder unsubstituiert durch einen Methylrest in der Position ortho, meta oder para,
R5 ein Wasserstoffatom oder einen Methylrest darstellt,
R6 einen Methylrest oder Phenyl darstellt, substituiert oder unsubstituiert durch einen Methylrest in der Position ortho, meta oder para,
m, n, o, p und q Zahlen von 0 bis 100 sind;
und dass das hochgesättigte Elastomer die folgenden Charakteristiken aufweist:
• m / p ≥ 1,75
• m ≥ 20
• n + o ≥ 10
• o + p ≤ 30

2. Kautschukzusammensetzung nach Anspruch 1,
**dadurch gekennzeichnet, dass** das hochgesättigte Elastomer Einheiten der folgenden Kategorie F, die ausschließlich von Nicht-Dien-Monomeren stammen, in einem Molverhältnis von weniger als 40 % umfasst:
F) 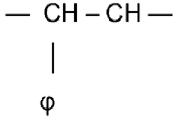 wobei ϕ einen Phenylrest darstellt, substituiert oder unsubstituiert durch einen Methylrest in der Position ortho, meta oder para, wobei ϕ vorzugsweise einen Phenylrest darstellt.

3. Kautschukzusammensetzung nach Anspruch 1 oder 2,
**dadurch gekennzeichnet, dass** das hochgesättigte Elastomer derart ist, dass R1, R2, R3 und R4 identisch sind und ein Wasserstoffatom darstellen und q 0 ist.

4. Kautschukzusammensetzung nach einem der vorhergehenden Ansprüche,
**dadurch gekennzeichnet, dass** das hochgesättigte Elastomer die folgenden Charakteristiken aufweist:
• m ≥ 50 und
• o + p ≤15

5. Kautschukzusammensetzung nach einem der vorhergehenden Ansprüche,
**dadurch gekennzeichnet, dass** o 0 ist.

6. Kautschukzusammensetzung nach einem der vorhergehenden Ansprüche,
**dadurch gekennzeichnet, dass** die Elastomermatrix ausschließlich aus dem hochgesättigten Dien-Elastomer besteht.

7. Kautschukzusammensetzung nach einem der Ansprüche 1 bis 5,
**dadurch gekennzeichnet, dass** die Elastomermatrix mindestens 40 pce hochgesättigtes Dien-Elastomer und höchstens 60 pce mindestens eines anderen Dien-Elastomers umfasst.

8. Kautschukzusammensetzung nach einem der vorhergehenden Ansprüche,
**dadurch gekennzeichnet, dass** die verstärkende Ladung Ruß umfasst.

9. Kautschukzusammensetzung nach Anspruch 8,
**dadurch gekennzeichnet, dass** die verstärkende Ladung zu 100 % aus Ruß besteht.

10. Kautschukzusammensetzung nach einem der Ansprüche 1 bis 8,
**dadurch gekennzeichnet, dass** die verstärkende Ladung eine andere anorganische verstärkende Ladung als Ruß, vorzugsweise Kieselerde, umfasst.

11. Verfahren zur Herstellung einer Kautschukzusammensetzung, wie in einem der Ansprüche 1 bis 10 definiert,
**dadurch gekennzeichnet, dass** dieses mindestens die folgenden Schritte umfasst:
- Ausführung, bei einer maximalen Temperatur zwischen 130°C und 200°C, vorzugsweise zwischen 145°C und 185°C, einer ersten Zeit einer thermomechanischen Arbeit an Basisbestandteilen, die für die Kautschukzusammensetzung notwendig sind, mit Ausnahme des Vernetzungssystems und gegebenenfalls eines Adhäsionspromotors, durch innigen Einschluss der Bestandteile der Zusammensetzung, durch Mischen in einem oder mehreren Schritten, in die Elastomermatrix, die hochgesättigtes Elastomer umfasst, anschließend
- Ausführung, bei einer Temperatur unter der maximalen Temperatur der ersten Zeit, vorzugsweise unter 120°C, einer zweiten Zeit einer mechanischen Arbeit, während welcher das Vernetzungssystem und gegebenenfalls ein Adhäsionspromotor eingeschlossen werden.

12. Verfahren nach Anspruch 11,
**dadurch gekennzeichnet, dass** dieses den Schritt der Herstellung des hochgesättigten Elastomers umfasst, der aus der Hydrierung eines Dien-Elastomers besteht, bis die in Anspruch 1 definierten Mikrostrukturcharakteristiken erzielt werden.

13. Halbfertiger Artikel, umfassend eine Kautschukzusammensetzung, wie in einem der Ansprüche 1 bis 10 definiert.

14. Reifen, umfassend einen halbfertigen Artikel nach Anspruch 13.

15. Reifen nach Anspruch 14,
**dadurch gekennzeichnet, dass** der halbfertige Artikel eine Lauffläche ist.

## Claims

1. Rubber composition based on a reinforcing filler and on an elastomeric matrix comprising a highly saturated diene elastomer,
**characterized in that** the highly saturated elastomer comprises, distributed randomly within the elastomer,
- units of the following categories A, B, C, D and E, or
- units of these same categories A, B, C, D and E comprising, for at least one of the categories B, C, D and E, a mixture of at least two different units of the same category which differ from one another through the nature of their side groups Ri:
A)
-CH₂-CH₂-
at a molar fraction of m%
B) 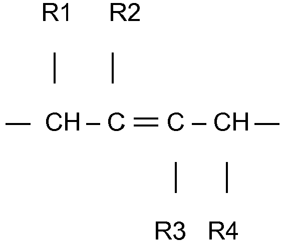 at a molar fraction of n%
C) 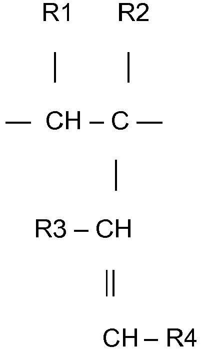 at a molar fraction of o%
D) 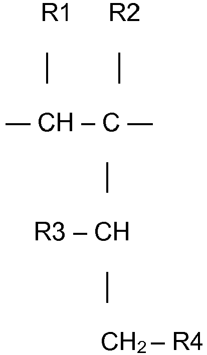 at a molar fraction of p%
E) 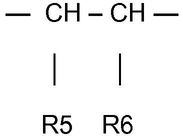 at a molar fraction of q%
where
R1, R2, R3 and R4, which are identical or different, denote a hydrogen atom, a methyl radical or a phenyl radical which is substituted or unsubstituted in the ortho, meta or para position by a methyl radical,
R5 denotes a hydrogen atom or a methyl radical,
R6 denotes a methyl radical or a phenyl radical which is substituted or unsubstituted in the ortho, meta or para position by a methyl radical,
m, n, o, p and q are numbers ranging from 0 to 100;
and **in that** the highly saturated elastomer has the following properties:
• m / p ≥ 1.75
• m ≥ 20
• n + o ≥ 10
• o + p ≤ 30

2. Rubber composition according to Claim 1, **characterized in that** the highly saturated elastomer comprises units of the following category F derived exclusively from non-diene monomers, at a molar ratio of less than 40%:
F) 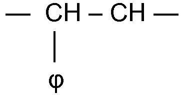 with ϕ denoting a phenyl radical which is substituted or unsubstituted in the ortho, meta or para position by a methyl radical; ϕ preferably denotes a phenyl radical.

3. Rubber composition according to Claim 1 or 2, **characterized in that** the highly saturated elastomer is such that R1, R2, R3 and R4 are identical and denote a hydrogen atom, and q is equal to 0.

4. Rubber composition according to any one of the preceding claims, **characterized in that** the highly saturated elastomer has the following properties:
• m ≥ 50 and
• o + p ≤ 15

5. Rubber composition according to any one of the preceding claims, **characterized in that** o is equal to 0.

6. Rubber composition according to any one of the preceding claims, **characterized in that** the elastomeric matrix consists solely of the highly saturated diene elastomer.

7. Rubber composition according to any one of Claims 1 to 5, **characterized in that** the elastomeric matrix comprises at least 40 phr of highly saturated diene elastomer and at most 60 phr of at least one other diene elastomer.

8. Rubber composition according to any one of the preceding claims, **characterized in that** the reinforcing filler comprises carbon black.

9. Rubber composition according to Claim 8, **characterized in that** the reinforcing filler consists of 100% of carbon black.

10. Rubber composition according to any one of Claims 1 to 8, **characterized in that** the reinforcing filler comprises an inorganic reinforcing filler other than carbon black, preferably silica.

11. Process for preparing a rubber composition as defined in any one of Claims 1 to 10, **characterized in that** it comprises at least the following steps:
• carrying out, at a maximum temperature of between 130°C and 200°C, preferably between 145°C and 185°C, a first step of thermomechanical working of the base constituents needed for the rubber composition, with the exception of the crosslinking system and if applicable an adhesion promoter, by intimately incorporating, by kneading in one or several stages, composition ingredients into the elastomeric matrix comprising the highly saturated elastomer, then
• carrying out, at a temperature lower than said maximum temperature of said first step, preferably lower than 120°C, a second step of mechanical working during which said crosslinking system and if applicable an adhesion promoter are incorporated.

12. Process according to Claim 11, **characterized in that** it comprises the step of preparing the highly saturated elastomer, which step consists in hydrogenating a diene elastomer until the microstructural properties as defined in Claim 1 are obtained.

13. Semi-finished article comprising a rubber composition as defined in any one of Claims 1 to 10.

14. Tyre incorporating a semi-finished article according to Claim 13.

15. Tyre according to Claim 14, **characterized in that** the semi-finished article is a tread.
